# EUROPEAN PATENT APPLICATION

(11) **EP 4 583 127 A1**
(43) Date of publication of application: **09.07.2025**
(21) Application number: 23860488.8
(22) Date of filing: 31.08.2023
(51) Int. Cl.: H01B 7/02

(54) **METHOD FOR PRODUCING MOLDED ARTICLE, MOLDED ARTICLE, AND RECTANGULAR WIRE**

(30) Priority: 31.08.2022 JP 2022138203
(71) Applicant: AGC INC., Chiyoda-ku, Tokyo 1008405 (JP)
(72) Inventor: ABE, Masatoshi, Tokyo 100-8405 (JP); HOSODA, Tomoya, Tokyo 100-8405 (JP)
(74) Representative: Müller-Boré & Partner Patentanwälte PartG mbB
(86) International application number: PCT/JP2023/031830
(87) International publication number: WO 2024/048726

(57) **Abstract**

A method for producing a molded product in which the resin F is dispersed in the resin P, the method comprising: melting a composition comprising a polyimide-type thermoplastic resin P and a fluorine-type thermoplastic resin F having a glass transition temperature lower than that of the resin P, the composition having a difference ΔTg between a glass transition temperature Tg-p of the resin P and a glass transition temperature Tg-f of resin F of 75 to 175°C at a temperature equal to or higher than the melting point of the resin P or the melting point of resin F, whichever is higher, to obtain a molten product; and starting to cool the molten product at a cooling rate of 10°C/min or more to obtain a molded product.

## Description

### Technical Field

The present disclosure relates to an method of producing a molded product, a molded product, and a rectangular wire.

### Background Art

Fluororesins exhibit excellent properties such as heat resistance, flame resistance, chemical resistance, weather resistance, non-stick characteristics, low friction, and low dielectric properties. Due to these advantages, they are widely used in various fields, including corrosion-resistant piping materials for chemical plants, materials for agricultural vinyl greenhouses, release coatings for kitchenware, and insulation coatings for electric wires.

Patent Document 1 discloses a prepreg comprising a reinforcing fiber and a matrix resin, in which: the matrix resin includes a thermoplastic resin (excluding the fluororesin described below) and a melt-processable fluororesin having a melting point of 100 to 325°C and at least one functional group selected from the group consisting of a carbonyl-containing group, a hydroxyl group, an epoxy group, and an isocyanate group; and a content of the thermoplastic resin is from more than 30 to 99 % by mass and a content of the fluororesin is from 1 to less than 70 % by mass with respect to a total 100% by mass of the thermoplastic resin and the fluororesin, the thermoplastic resin.

### Patent Documents

Patent Document 1: International Publication No. WO 2017/122735

### SUMMARY OF INVENTION

### Technical Problem

In addition to the prepreg described in Patent Document 1, the applications of a melt-kneaded composition of a fluorine-type resin and the other thermoplastic resin are extensive. For example, the other thermoplastic resin, such as a polyimide-type thermoplastic resin, which exhibit excellent mechanical properties, heat resistance, dimensional stability, chemical resistance and low water absorption, may be used in combination. Applications of the melt-kneaded composition of a fluorine-type resin and a polyimide-type thermoplastic resin include, for instance, insulating coatings for rectangular wires.

Although the melt-kneaded composition of a fluorine-type resin and a polyimide-type thermoplastic resin exhibits the aforementioned excellent properties, its performance remains insufficient. In particular, in a case in which a proportion of the fluorine-type resin is low and the fluorine-type resin is dispersed within the polyimide-type thermoplastic resin, the desired properties may not be fully realized, and there is a need for performance improvement. The present inventors have found that when the melt-kneaded composition of a fluorine-type resin and a polyimide-type thermoplastic resin is applied to a rectangular wire, a stress tends to concentrate at the edge portions of the rectangular conductor, which serves as the core wire, when the rectangular wire is bent and deformed, and cracks are likely to occur in a coating layer of the coating material at the end. They also found that the coating layer of the coating material was prone to peeling off from the areas where cracks occurred.

In one embodiment of the present disclosure, a method of producing a molded product is provided in which a fluorine-type resin is dispersed in a polyimide-type thermoplastic resin, the molded product having excellent adhesion to an adherend and excellent crack resistance during bending deformation.

In another embodiment of the present disclosure, a molded product is provided in which a fluorine-type resin is dispersed in a polyimide-type thermoplastic resin, the molded product having excellent adhesion to an adherend and excellent crack resistance during bending deformation.

Furthermore, in one embodiment of the present disclosure, a rectangular wire is provided that has excellent adhesion between a rectangular conductor and a coating layer of an insulating coating material, and excellent crack resistance during bending deformation.

### Solution to Problem

The present disclosure includes the following embodiments.
<1> A method of producing a molded product in which a fluorine-type thermoplastic resin F is dispersed in a polyimide-type thermoplastic resin P, the method including:
   preparing a composition including the polyimide-type thermoplastic resin P and the fluorine-type thermoplastic resin F which has a lower glass transition temperature than the polyimide-type thermoplastic resin P, in which a difference ΔTg between a glass transition temperature Tg-p of the polyimide-type thermoplastic resin P and a glass transition temperature Tg-f of the fluorine-type thermoplastic resin F is from 75 to 175°C;
   melting the composition at a temperature equal to or higher than a higher melting point between a melting point of the polyimide-type thermoplastic resin P and a melting point of the fluorine-type thermoplastic resin F, and obtaining a molten product; and
   starting cooling of the molten product at a cooling rate of 10°C/min or more and obtaining a molded product.
<2> A method of producing a molded product according to <1>, in which the glass transition temperature Tg-p is from 150 to 250°C.
<3> A method of producing a molded product according to <1> or <2>, in which a mass ratio of the polyimide-type thermoplastic resin/the fluorine-type thermoplastic resin F in the composition is from 40/60 to 98/2.
<4> The method of producing a molded product according to any one of <1> to <3>, in which an average dispersed particle size of the fluorine-type thermoplastic resin F in the molded product is less than 10 µm.
<5> The method for producing a molded product according to any one of <1> to <4>, in which the difference ΔTg is 75 to 125°C.
<6> The method of producing a molded product according to any one of <1> to <5>, in which the cooling rate is 50°C/min or more.
<7> The method of producing a molded product according to any one of <1> to <6>, in which the melting point of the polyimide-type thermoplastic resin P is from 300°C to less than 420°C.
<8> The method of producing a molded product according to any one of <1> to <7>, in which the melting point of the fluorine-type thermoplastic resin F is from 260 to 320°C.
<9> A molded product, including a polyimide-type thermoplastic resin P having a melting point from 300°C to less than 420°C, and a fluorine-type thermoplastic resin F having a melting point from 260 to320°C, in which:
   a mass ratio of the polyimide-type thermoplastic resin P/the fluorine-type thermoplastic resin F is from 40/60 to 98/2; and
   the fluorine-type thermoplastic resin F is dispersed in the polyimide-type thermoplastic resin P with an average dispersed particle size of less than 10 µm.
<10> A rectangular wire, including a rectangular conductor having a rectangular cross section perpendicular to an axial direction, and a coating layer of an insulating coating material covering an entire circumferential direction of the rectangular conductor, in which:
   the insulating coating material includes a polyimide-type thermoplastic resin P having a melting point from 300°C to less than 420°C, and a fluorine-type thermoplastic resin F having a melting point from 260 to 320°C;
   a mass ratio of the polyimide-type thermoplastic resin P/the fluorine-type thermoplastic resin F is from 40/60 to 98/2;
   the fluorine-type thermoplastic resin F is dispersed in the polyimide-type thermoplastic resin P; and
   an average dispersed particle size of the fluorine-type thermoplastic resin F is less than 10 µm.
<11> The rectangular wire according to <10>, in which an average thickness of the coating layer of the insulating coating material is from 10 to 300 µm.
<12> The rectangular wire according to <10> or <11>, in which an unbiased standard deviation of a thickness of the coating layer of the insulating coating material in the axial direction of the rectangular wire is less than 0.06 mm.
<13> The rectangular wire according to any one of <10> to <12>, in which a bending stress of the insulating coating material at 23°C is less than 140 MPa.
<14>. The rectangular wire according to any one of <10> to <13>, in which a cross-sectional area of the rectangular conductor is 2.6 mm² or more.

### Advantageous Effects of Invention

According to one embodiment of the present disclosure, there can be provided a method of producing a molded product in which a fluorine-type resin is dispersed in a polyimide-type thermoplastic resin, the molded product having excellent adhesion to an adherend and excellent crack resistance during bending deformation.

According to one embodiment of the present disclosure, there can be provided a molded product in which a fluorine-type resin is dispersed in a polyimide-type thermoplastic resin, the molded product having excellent adhesion to an adherend and excellent crack resistance during bending deformation.

According to one embodiment of the present disclosure, there can be provided a rectangular wire that has excellent adhesion between a rectangular conductor and a coating layer of an insulating coating material, and excellent crack resistance during bending deformation.

### DESCRIPTION OF EMBODIMENTS

A melting point is a temperature corresponding to a maximum value of a melting peak measured by differential scanning calorimetry (DSC).

A cooling rate (°C/min) of a molten product is a difference between a temperature of the molten product in the heating area and a temperature of the molten product measured within 30 seconds to 1 minute after it is discharged from the heating area, divided by the time.

The melt flow rate is a melt mass flow rate defined in JIS K 7210-1:2014 (corresponding international standard ISO 1133-1:2011). Hereinafter, the melt flow rate will also be referred to as MFR.

A glass transition temperature is a temperature corresponding to a maximum value of a tan δ peak measured by dynamic mechanical analysis (DMA). Hereinafter, the glass transition temperature will also be referred to as Tg.

An average dispersed particle size is determined by observing a molded product or insulating coating material with a scanning electron microscope (SEM), measuring a maximum diameter of 100 randomly selected domains (dispersed particles), and taking an arithmetic average. The molded product or insulating coating material is sliced as necessary to prepare SEM observation samples.

An average thickness of a coating layer of an insulating coating material is determined by taking a 5 m length of rectangular wire, measuring a thickness of the coating layer of the insulating coating material on a long side of the cross section perpendicular to an axial direction every 100 mm, and taking an arithmetic average.

An unbiased standard deviation of a thickness of a coating layer of an insulating coating material in the axial direction of the rectangular wire is determined by taking a 5 m length of rectangular wire, measuring a thickness of a coating layer of a insulating coating material on the long side of the cross section perpendicular to the axial direction every 100 mm, and using the measured values.

A bending stress is a value obtained by three-point bending (method A) as specified in JIS K 7074:1998. In other words, at any given point during a three-point bending test, the value is obtained by multiplying a bending load applied to a test specimen by a distance between the support points, dividing the result by the product of the specimen's width and the square of its thickness, and then multiplying by a coefficient.

A unit of a polymer means a portion (polymerization unit) derived from a monomer, which is formed by polymerization of the monomer. The unit may be a unit formed directly by a polymerization reaction, or may be a unit in which a portion of the unit is converted into a different structure by processing the polymer. In the present disclosure, a unit based on a monomer is also referred to as a monomer unit.

In the present disclosure, a numerical range indicated using "to" includes the numerical values described before and after "to" as the minimum and maximum values, respectively.

In the present disclosure, for a numerical range described in a stepwise manner, the upper or lower limit of one numerical range may be replaced with the upper or lower limit of another stepwise numerical range. Additionally, in a numerical range described in the present disclosure, the upper or lower limit of a numerical range may be replaced with a values indicated in the examples.

In the present disclosure, each component may contain multiple types of the corresponding substance. In a case in which multiple types of substances corresponding to each component are present in a composition, a content or amount of each component means a total content or amount of the multiple types of substances present in the composition, unless otherwise specified.

### [Method of producing a molded product]

A Method of producing a molded product in which a fluorine-type thermoplastic resin F (hereinafter, also referred to as "resin F") is dispersed in a polyimide-type thermoplastic resin P (hereinafter, also referred to as "resin P"), the method in the present disclosure including:
preparing a composition comprising the resin P and the resin F which has a lower glass transition temperature than the resin P, wherein a difference ΔTg between a glass transition temperature Tg-p of the resin P and a glass transition temperature Tg-f of the resin F is from 75 to 175°C;
melting the composition at a temperature equal to or higher than a higher melting point between a melting point of the resin P and a melting point of the resin F, and obtaining a molten product; and
starting cooling of the molten product at a cooling rate of 10°C/min or more and obtaining a molded product.

By using the method of producing described above, a molded product with excellent adhesion to an adherend and excellent crack resistance during bending deformation can be obtained. The reason for this is not clear, but is presumed to be as follows.

In a case in which the composition is melted at a temperature equal to or higher than a higher melting point between a melting point of the resin P and a melting point of the resin F, the resin F, which occupies a smaller volume than the resin P, flows in the resin P and mixes with the resin P, forming a molten product of both resins. In the subsequent cooling, the resin P, which has a higher glass transition temperature than the resin F, begins to solidify earlier than the resin F. However, at temperatures equal to or higher than the glass transition temperature of the resin F, the resin F remains flexible. As a result, the resin F, which has low affinity with different materials, tend to aggregate and isolate, making it difficult to disperse densely in the resin P. In such a case, by satisfying specific cooling condition, the aggregation of the resin F in the resin P can be suppressed. As a result, a molded product in which F resin is densely dispersed in the resin P is more likely to be formed. In particular, in a case in which the glass transition temperature difference ΔTg between the resin P and the resin F is set within a specified range, a molded product in which F resin is densely dispersed in the resin P can be effectively formed. As a result, it is presumed that the molded product formed exhibits the above-mentioned characteristics.

The molten product is obtained by melt-kneading the resin P and the resin F. At this time, other components may also be added. Examples of devices used for melt-kneading include known kneaders (a twin-screw extruder, a single-screw extruder, a kneaders, mixer, or the like). Among these, an extruder is preferred, and a twin-screw extruder is particularly preferred.

A melt-kneading temperature may be equal to or higher than a higher melting point between a melting point of the resin P and a melting point of the resin F, and for example, preferably from 260°C to less than 450°C, and more preferably from 320 to 420°C. In a case in which the melt-kneading temperature is 260°C or higher, the resin F is easily dispersed in the resin P during melt-kneading, and an average dispersed particle size of the resin F is easily made less than 10 µm. In a case in which the melt-kneading temperature is less than 450°C, deterioration of the resin P and the resin F due to heat is easily suppressed.

A residence time in the extruder is preferably from 10 seconds to 30 minutes.

A screw rotation speed of the extruder is preferably from 50 to 2,000 rpm.

A glass transition temperature Tg-f of the resin F is lower than a glass transition temperature Tg-p of the resin P, and the difference ΔTg between Tg-p and Tg-f is from 75 to 175°C, preferably from 75 to 160°C, more preferably from 75 to 125°C, and even more preferably from 75 to 100°C.

A mass ratio of the resin P/the resin F is preferably from 40/60 to 98/2, more preferably from 50/50 to 98/2, even more preferably from 65/35 to 95/5, and particularly preferably from 70/30 to 90/10.

In a case in which the mass ratio is 40/60 or more, in other words, in a case in which the resin P is 40 parts by mass or more with respect to 100 parts by mass of a total of the resin P and the resin F, the molded product has excellent adhesion to an adherend, and the resin F is easily dispersed in the resin P. In a case in which the mass ratio is 98/2 or less, a bending stress of the molded product is low, and a resistance to cracking during bending deformation is excellent.

The obtained molten product is started cooling at a cooling rate of 10°C/min or more to obtain a molded product. The cooling rate at the start of cooling is preferably 20°C/min or more, more preferably 40°C/min or more, and even more preferably 50°C/min or more. The cooling rate is preferably 200°C/min or less, and more preferably 150°C/min or more. In a case in which the cooling rate is 200°C/min or less, an occurrence of cracks in the molded product tends to be suppressed.

The start of cooling refers to a time when the molded product is discharged outside the heating area. For example, in a case in which an extruder is used as a kneader, it refers to a time when the molded product is extruded from an outlet of the extruder. Cooling at a rate of 10°C/min or more is preferably performed until a temperature of the molded product reaches at least the glass transition temperature Tg-f of the resin F, and after cooling to a temperature below Tg-f, the cooling rate is not particularly limited.

Hereinafer, a method of producing a molded product will be described taking as an example a case where a molded product is produced by a melt extrusion molding machine.

The resin P, the resin F and other components as necessary are fed into a raw material inlet of the melt extrusion molding machine. A temperature during melt kneading in the melt extrusion molding machine is set to be a temperature equal to or higher than a higher melting point between a melting point of the resin P and a melting point of the resin F. In a case in which a die is installed downstream of the melt extrusion molding machine, a temperature of the die is also equal to or higher than a higher melting point between a melting point of the resin P and a melting point of the resin F, and a cooling rate at an outlet from the die is set to 10°C/min or higher. An air cooler may be installed at the outlet of the die, and the cooling rate may be adjusted by the air cooler. A hot air blower may also be installed at the outlet of the die, and the cooling rate may be adjusted by the air cooler and the hot air blower.

In a case in which a sheet-like molded product is to be obtained, a pressure roll may be rotatably supported below the die, and a cooling roll may be held in sliding contact with the pressure roll. Multiple cooling rolls may be installed. Further downstream, a winder for winding up the sheet may be installed.

In the obtained molded product, the resin F is dispersed in the resin P, and the average dispersed particle size of the resin F is preferably less than 10 µm, more preferably 7 µm or less, and even more preferably 5 µm or less. In a case in which the average dispersed particle size of the resin F is less than 10 µm, the molded product has excellent crack resistance during bending deformation.

A lower limit of the average dispersed particle size of the resin F is not particularly limited, and for example, 0.01 µm.

The average dispersed particle size of the resin F may be adjusted by the mass ratio of the resin P/the resin F, the kneading conditions, the cooling rate, or the like.

The materials used in the producing method in the present disclosure are described below.

### <Polyimide-Type Thermoplastic Resin>

The resin P is a thermoplastic resin having an imide group in the main chain.

Examples of the resin P include thermoplastic polyimide (hereinafter also referred to as "TPI"), polyetherimide, polyamideimide, or the like.

A glass transition temperature Tg-p of the resin P is preferably 150°C or higher, more preferably 170°C or higher, and even more preferably 180°C or higher. An upper limit of Tg-p is, for example, 250°C or lower, and may be 200° C or lower.

The resin P may or may not have a melting point. From the viewpoint of abrasion resistance, it is preferable that the resin P has a melting point.

The melting point of the resin P having a melting point is preferably 300°C or higher, more preferably 320°C or higher, and even more preferably 340°C or higher. In a case in which the melting point of the resin P is 300°C or higher, the heat resistance and abrasion resistance of the insulating coating material are excellent.

The melting point of the resin P having a melting point is preferably less than 420°C, and more preferably 415°C or lower. In a case in which the melting point of the resin P is less than 420°C, the processability is excellent.

The lower limit value and the upper limit value can be combined as appropriate.

Examples of the resin P having a melting point from 300°C to less than 420°C include thermoplastic polyimide (TPI).

The resin P may be commercially available, or may be manufactured by a known manufacturing method. Examples of commercially available TPI include the Aurum (registered trademark) series manufactured by Mitsui Chemicals, Inc., and the Surprim (registered trademark) series manufactured by Mitsubishi Gas Chemical Company, Inc.

### <Fluorine-Type Thermoplastic Resin>

A glass transition temperature Tg-f of the resin F is lower than the glass transition temperature Tg-p of the resin P, and the difference ΔTg between Tg-f and Tg-p is from 75 to 175°C. Tg-f is, for example, preferably 75°C or higher, and more preferably 80°C or higher. An upper limit of Tg-f is, for example, 175°C or lower, and may be 150°C or lower, 120°C or lower, or 100°C or lower.

The lower limit and upper limit can be combined as appropriate.

A melting point of the resin F is preferably 260°C or higher, more preferably 270°C or higher, and even more preferably 280°C or higher. In a case in which the melting point of the resin F is 260°C or higher, the abrasion resistance is excellent.

The melting point of the resin F is preferably 380°C or less, more preferably 340°C or less, and even more preferably 320°C or less. In a case in which the melting point of the resin F is 380°C or less, the resin F is easily dispersed in the resin P.

The lower limit value and the upper limit value can be combined as appropriate.

The resin F preferably has at least one functional group selected from the group consisting of a carbonyl group-containing group, a hydroxy group, an epoxy group, and an isocyanate group. The presence of the functional group in resin F makes it easier to disperse in resin P.

The functional group is preferably present as either one or both of a terminal group of the main chain and a pendant group of the main chain in the resin F.

The functional group is preferably a carbonyl-containing group from the viewpoint of dispersibility in the resin P.

The carbonyl-containing group is a group that has a carbonyl group (-C(=O)-) in its structure. Examples of the carbonyl-containing group include a group that has a carbonyl group between the carbon atoms of a hydrocarbon group, a carbonate group, a carboxy group, a haloformyl group, an alkoxycarbonyl group, and an acid anhydride group.

Examples of the hydrocarbon group in the group that has a carbonyl group between the carbon atoms of a hydrocarbon group include an alkylene group having 2 to 8 carbon atoms. A number of carbon atoms in the alkylene group does not include the carbon that constitutes the carbonyl group. The alkylene group may be linear or branched.

A haloformyl group is represented by -C(=O)-X (wherein X is a halogen atom). Examples of the halogen atom in the haloformyl group include a fluorine atom and a chlorine atom, with a fluorine atom being preferred. That is, a fluoroformyl group (also known as a carbonyl fluoride group) is preferred as the haloformyl group.

Examples of the alkoxy group in the alkoxycarbonyl group include include an alkoxy group having 1 to 8 carbon atoms, and is preferably methoxy group or an ethoxy group. The alkoxy group may be either linear or branched.

A content of a functional group in the resin F is preferably 10 to 60,000 per 1 × 10⁶ main chain carbon atoms of the resin F, more preferably 100 to 50,000, even more preferably 100 to 10,000, and particularly preferably 300 to 5,000. In a case in which the content of the functional group is equal to or greater than the lower limit, the resin has excellent dispersibility, and if it is equal to or less than the upper limit, the molded product has excellent thermal stability.

The content of the functional group can be measured by methods such as a nuclear magnetic resonance (NMR) analysis and an infrared absorption spectroscopy. For example, as described in JP 2007-314720 A, a proportion (% by mole) of units having a functional group to all units constituting the resin F can be measured using a method such as an infrared absorption spectroscopy, and the content of the functional group can be calculated from the proportion.

Examples of the resin F include a fluorine-containing polymer having at least one of a unit having a functional group and an end group having a functional group. Examples of the fluorine-containing polymer include a fluorine-containing copolymer (hereinafter also referred to as "PFA") having a tetrafluoroethylene (hereinafter also referred to as "TFE") unit and a perfluoro(alkyl vinyl ether) (hereinafter also referred to as "PAVE") unit, a fluorine-containing copolymer (hereinafter also referred to as "FEP") having a TFE unit and a hexafluoropropylene (hereinafter also referred to as "HFP") unit, a fluorine-containing copolymer having a TFE unit and an ethylene unit, a fluorine-containing polymer having a vinylidene fluoride unit, a fluorine-containing polymer having chlorotrifluoroethylene (hereinafter also referred to as "CTFE") unit, and a fluorine-containing copolymer having an ethylene unit and a CTFE unit. Among these, from the viewpoints of electrical properties (dielectric constant, dielectric loss tangent) and heat resistance, PFA and FEP are preferred, and PFA is particularly preferred.

### <Other Components>

The molded product may contain other components. Examples of other components include a filler, a pigment, and other additives.

Specific examples of the filler include a fibrous filler such as a glass fiber, a carbon fiber, a boron fiber, an aramid fiber, a liquid crystal polyester fiber, and a stainless steel microfiber; and a powdered filler such as talc, mica, graphite, molybdenum disulfide, polytetrafluoroethylene, calcium carbonate, silica, silica alumina, alumina, and titanium dioxide. Other examples include a hydrotalcite and a metal oxide, such as zinc oxide, magnesium oxide, titanium oxide, and lead oxide. One or more types of the filler can be used.

Specific examples of the pigment include a color pigment such as an organic pigment and an inorganic pigment. Specific examples include carbon black (black pigment), iron oxide (red pigment), aluminum cobalt oxide (blue pigment), copper phthalocyanine (blue pigment, green pigment), perylene (red pigment), and bismuth vanadate (yellow pigment).

A total content of the resin P and the resin F is preferably 50% by mass or more, more preferably 70% by mass or more, and may be 100% by mass, with respect to a total mass of the molded product.

### [Molded Product]

The molded product of one embodiment of the present disclosure contains a polyimide-type thermoplastic resin P having a melting point from 300°C to less than 420°C, and a fluorine-type thermoplastic resin F having a melting point from 260 to320°C, in which: a mass ratio of the polyimide-type thermoplastic resin P/the fluorine-type thermoplastic resin F is from 40/60 to 98/2; and the fluorine-type thermoplastic resin F is dispersed in the polyimide-type thermoplastic resin P with an average dispersed particle size of less than 10 µm.

In addition, a molded product in another embodiment in the present disclosure includes a polyimide-type thermoplastic resin P and a fluorine-type thermoplastic resin F which has a lower glass transition temperature than the polyimide-type thermoplastic resin P, in which a difference ΔTg between a glass transition temperature Tg-p of the polyimide-type thermoplastic resin P and a glass transition temperature Tg-f of the fluorine-type thermoplastic resin F is from 75 to 175°C; a mass ratio of the polyimide-type thermoplastic resin P/the fluorine-type thermoplastic resin F is from 40/60 to 98/2; and the fluorine-type thermoplastic resin F is dispersed in the polyimide-type thermoplastic resin P with an average dispersed particle size of less than 10 µm.

By forming a molded product having the above configuration, the molded product has excellent adhesion to an adherend and excellent crack resistance during bending deformation. The resin P and the resin F are synonymous with those described in the method of producing a molded product, and other related aspects can also be referred to. The molded product having the above configuration can be obtained by the method of producing a molded product described above.

### [Rectangular wire]

A rectangular wire in the present disclosure includes a rectangular conductor having a rectangular cross section perpendicular to an axial direction, and a coating layer of an insulating coating material covering an entire circumferential direction of the rectangular conductor.

### (Rectangular Conductor)

The rectangular conductor is a core of the rectangular wire, and is a conductor having a rectangular cross section perpendicular to an axial direction.

A material of the rectangular conductor may be any material known as a core of an electric wire, such as copper, tin, silver, gold, aluminum, and alloys thereof. Among these, copper is preferred from the viewpoint of ease of forming the rectangular conductor.

A thickness of the rectangular conductor is, for example, from 0.5 to 3.0 mm.

A width of the rectangular conductor is, for example, from 1.0 to 5.0 mm.

The cross-sectional area of the rectangular conductor is preferably 2.6 mm² or more, and more preferably 3.0 mm² or more. An upper limit of the cross-sectional area of the rectangular conductor is not particularly limited, and it is, for example, 15 mm².

The cross-sectional area of the rectangular conductor is an area of a cross section perpendicular to an axial direction.

In a case in which an adhesion between the rectangular conductor and the coating layer of an insulating coating material is weak, the larger the cross-sectional area of the rectangular conductor, the easier it is for the coating layer of an insulating coating material to peel off from the rectangular conductor. Since the insulating coating material in the present embodiment has excellent adhesion to the rectangular conductor, the larger the cross-sectional area of the rectangular conductor, the more useful it is.

### (Insulating Coating Material)

An insulating coating material contains a polyimide-type thermoplastic resin P having a melting point from 300°C to less than 420°C, and a fluorine-type thermoplastic resin F having a melting point from 260 to 320°C, in which a mass ratio of the resin P/the resin F is from 40/60 to 98/2; the fluorine-type thermoplastic resin F is dispersed in the polyimide-type thermoplastic resin P; and an average dispersed particle size of the fluorine-type thermoplastic resin F is less than 10 µm.

The resin P and the resin F are synonymous with those described in the method of producing a molded product, and other related aspects can also be referred to.

A bending stress of the insulating coating material at 23°C is preferably less than 140 MPa, preferably 135 MPa or less, and more preferably 125 MPa or less. In a case in which the bending stress is less than 140 MPa, it has excellent crack resistance during bending deformation.

The bending stress of the insulating coating material at 23°C is preferably 90 MPa or more, and more preferably 100 MPa or more. In a case in which the bending stress is 100 MPa or more, it has excellent abrasion resistance.

The above lower limit and upper limit can be combined as appropriate.

The bending stress may be adjusted by the bending stress of the resin P itself, the mass ratio of the resin P/the resin F, the kneading conditions, or the like.

A MFR of the insulating coating material at 400°C and 5 kgf is preferably 5 to 200 g/10 min, more preferably 20 to 90 g/10 min, and even more preferably 30 to 80 g/10 min.

### (Insulating Coating Layer)

An average thickness of the insulating coating layer is preferably 10 µm or more, more preferably 50 µm or more, and even more preferably 100 µm or more. In a case in which the average thickness of the coating is 10 µm or more, the tracking resistance is excellent.

The average thickness of the insulating coating layer is preferably 300 µm or less, more preferably 250 µm or less, and even more preferably 200 µm or less. In a case in which the average thickness of the coating is 300 µm or less, an overall thickness of the rectangular wire may be made thin, and an overall coil space can be saved in a case of coiled rectangular wire, which contributes to the miniaturization of electrical equipment.

The lower limit and upper limit can be combined as appropriate.

An unbiased standard deviation of the thickness of the coating layer of the insulating coating material in the axial direction of the rectangular wire (hereinafter simply referred to as "thickness variation") is preferably less than 0.06 mm, more preferably 0.03 mm or less, and even more preferably 0.01 mm or less. In a case in which the thickness variation of the coating layer is less than 0.06 mm, the crack resistance and tracking resistance during bending deformation are excellent.

The smaller the thickness variation of the coating layer, the more preferable it is, and it may be 0. From the viewpoint of ease of manufacture and yield, the thickness variation of the coating layer is preferably 0.001 mm or more.

In the rectangular wire, another layer may be interposed between the rectangular conductor and the coating layer of the insulating coating material. Examples of the other layer include a primer layer.

In the present disclosure, since the rectangular conductor and the coating layer of the insulating coating material are well adhered to each other without the primer layer, it is preferable that the rectangular conductor and the coating layer of the insulating coating material are in direct contact with each other.

### (Method of Producing Rectangular Wire)

The rectangular wire may be produced for example, by forming a film of insulating coating material on a rectangular conductor so as to cover an entire circumference of the rectangular conductor.

From the viewpoint of minimizing the thickness variation of the coating layer of the insulating coating material, a preferred molding method is to use an extruder equipped with a die to melt the insulating coating material and extrude a molten insulating coating material from the die around the rectangular conductor.

A cylinder temperature and a die temperature of the extruder are preferably from 260°C to lower than 450°C, more preferably from 320 to 420°C. A cooling rate at the die outlet is preferably 10°C/min or higher, more preferably 20°C/min or higher, even more preferably 40°C/min or higher, and particularly preferably 50°C/min or higher.

### (Uses of Rectangular Wire)

The rectangular wire in the present disclosure may be suitably used in, for example, an insulating amplifier, an insulating transformer, an automobile alternator, a hybrid car, an electric ship, an electric aircraft, an electric vertical take-off and landing aircraft motor, or the like. It may also be used as various an electric wire (a wrapping electric wire, an electric wire for an automobile, an electric wire for a robot) and a coil winding (a magnet wire).

### EXAMPLE

The present disclosure will be described in more detail below using examples, but the present disclosure is not limited to these examples. In the following examples, Examples 1 to 6, 10, and 11 are examples, and Examples 7 to 9, and 12 to 14 are comparative examples. "Parts" means "parts by mass."

### (Evaluation Method)

### <Bending Stress of Insulating Coating Material>

The insulating coating material was molded into a test piece specified in JIS K 7074:1988 by injection molding. The obtained test piece was subjected to a three-point bending test (method A) in accordance with JIS K 7074:1988 under conditions of 23±2°C, 50 ±5% RH, support distance 4 cm, test speed 1 mm/min, and load cell 1t (10%) to determine the bending stress.

### <MFR of Insulating Coating Material>

After preheating the insulating coating material for 5 minutes, the MFR was measured at 400°C and 5 kgf in accordance with JIS K 7210-1:2014.

### <Average Dispersed Particle Size>

The insulating coating material was observed with a scanning electron microscope (SEM) to measure the maximum diameter of 100 randomly selected domains (dispersed particles), and the arithmetic mean was used as the average dispersed particle size.

### <Average Thickness and Thickness Variation of Coating Layer>

A 5m length of rectangular wire was taken, and a thickness of the coating layer of the insulating coating material on the long side in the cross section perpendicular to the axial direction (only a side in contact with an upper inner surface of the die during molding) was measured every 100mm.

An arithmetic mean of the measured values (mm) was taken as the average thickness.

An unbiased standard deviation of the measured values (mm) was taken as the thickness variation.

### <Crack Resistance when Bent>

A rectangular wire was bent in an edgewise direction and a flatwise direction, respectively. A deformation angle was 90±10°. The coating layer was then visually observed, and its crack resistance was evaluated according to the following criteria.
A: No cracks occurred even after 10 deformations.
B: Cracks occurred after 10 deformations.
C: Cracks occurred after 5 deformations, but no peeling occurred.
D: Cracks occurred after 5 deformations, and peeling also occurred.

### <Adhesion when Bent>

A rectangular wire was bent in an edgewise direction and a flatwise direction, respectively. A deformation angle was 90±10°. A cross section of the bent and deformed portion was then visually observed, and an adhesion was evaluated according to the following criteria.
A: Even after 10 bending cycles, the coating layer of the insulating coating material did not lift off from the conductor, and no space was generated between the coating layer of the insulating coating material and the conductor.
B: After 10 bending cycles, the coating layer of the insulating coating material lifted off from the conductor, and a space was generated between the coating layer of the insulating coating material and the conductor.
C: After 5 bending cycles, the coating layer of the insulating coating material lifted off from the conductor, and a space was generated between the coating layer of the insulating coating material and the conductor.

### (Materials Used)

TPI-1: Thermoplastic polyimide, glass transition temperature Tg-p = 250°C, melting point = 390°C, true specific gravity = 1.33, "Aurum PD500" manufactured by Mitsui Chemicals, Inc.
TPI-2: Thermoplastic polyimide, glass transition temperature Tg-p = 185°C, melting point = 320°C, true specific gravity = 1.29, "Sarprim TO65" manufactured by Mitsubishi Gas Chemical Company, Inc.
Fluorine resin-1: Fluoropolymer of TFE / norbornene anhydride / CF₂=CFOCF₂CF₂CF₃=97.9 / 0.1 / 2 (molar ratio), melting point = 310°C, glass transition temperature Tg-f = 90°C, True specific gravity = 2.17
Fluorine resin-2: Fluoropolymer containing TFE / ethylene / butene / itaconic anhydride, melting point = 190°C, glass transition temperature Tg-f = 50°C, true specific gravity = 2.14

### (Examples 1 to 7)

### <Production of Insulating Coating Material>

TPI-1 and fluorine resin-1 were dry blended according to the composition (parts) shown in Table 1, and fed into a twin-screw extruder (KZW15TW-45MG manufactured by Technovel corporation), melt-kneaded under the following conditions: resin discharge rate: 2 kg/hour, screw rotation speed: 400 rpm, set die temperature: 395°C, and pellet-shaped insulating coating material was obtained. In addition, the die outlet was air-cooled to adjust a cooling rate at the start of cooling to 50°C/min.

### <Preparation of Rectangular Wire>

The obtained insulating coating material was used to perform wire extrusion molding under the following conditions to obtain rectangular wire.
Die temperature: 400°C.
Cylinder temperature: from 370 to 400°C.
Rectangular conductor: rectangular copper wire 1.5 mm high × 2.3 mm wide.
Coating thickness (set value): 0.15 mm.
Cooling rate at start of cooling: 50°C/min.

### (Example 8)

An insulating coating material was produced in the same manner as in Examples 1 to 7, except that fluorine resin-1 was not used, and rectangular wire was obtained.

### (Example 9)

The insulating coating material obtained in Example 3 was further pulverized using a frozen grinder TPH-01 manufactured by AS ONE Corporation to obtain a powder of the insulating coating material.

The obtained powder was fed to the same rectangular conductor used in Examples 1 to 7 using a vibration feeder, and wire extrusion molding was performed to obtain rectangular wire.

The insulating coating material and rectangular wire of each example were evaluated as described above. The results are shown in Table 1.

Note that for Example 9, bending stress was not measured, and the average dispersed particle size could not be measured because the fluorine resin was not dispersed in the TPI.

**[Table 1]**

| | | Example | | | | | | | | |
|---|---|---|---|---|---|---|---|---|---|---|
| | | 1 | 2 | 3 | 4 | 5 | 6 | 7 | 8 | 9 |
| Composition | TPI-1 (Part) | 96 | 92 | 85 | 71 | 59 | 53 | 6 | 100 | 85 |
| | Fluorine Resin-1(Parts) | 4 | 8 | 15 | 29 | 41 | 47 | 94 | 0 | 15 |
| Bending Stress (MPa) | | 132 | 131 | 120 | 106 | 108 | 85 | 29 | 149 | n/a |
| MFR (400°C, 5kgf) | | 42 | 42 | 40 | 38 | 34 | 25 | 22 | 20 | 40 |
| Average Dispersed Particle Size (µm) | | 2 | 2 | 2 | 2 | 4 | 10 | 5 | - | n/a |
| Coating Layer | Average Thickness (mm) | 0.15 | 0.15 | 0.15 | 0.15 | 0.15 | 0.15 | 0.15 | 0.15 | 0.15 |
| | Thickness Variation (mm) | 0.01 | 0.01 | 0.01 | 0.01 | 0.01 | 0.01 | 0.01 | 0.01 | 0.06 |
| Crack Resistance when Bent | | B | B | B | B | B | C | D | B | C |
| Adhesion when Bent | | A | A | A | A | A | B | B | D | D |

### (Examples 10 to 14)

Insulating coating materials were produced in the same manner as in Examples 1 to 7, except that TPI-1 or TPI-2 and fluorine resin-1 or fluorine resin-2 were used in the proportions (parts) shown in Table 2, and the cooling rate at the start of cooling was set to conditions shown in Table 2 to obtain rectangular wire.

**[Table 2]**

| | | Example 10 | Example 11 | Example 12 | Example 13 | Example 14 |
|---|---|---|---|---|---|---|
| Resin P | TPI-1(Parts) | | 50 | 50 | 50 | |
| | TPI-2(Parts) | 50 | | | | 40 |
| Resin F | Fluorine Resin-1 (Parts) | 50 | 50 | 50 | | 60 |
| | Fluorine Resin-2 (Parts) | | | | 50 | |
| Difference of Glass Transition Temperature ΔTg(°C) | | 95 | 160 | 160 | 200 | 95 |
| Cooling Rate (°C/min) | | 50 | 50 | 5 | 50 | |
| Average Dispersed Particle Size (µm) | | <1 | 6 | >10 | >10 | <1 |
| Crack Resistance when Bent | | A | C | D | D | A |
| Adhesion when Bent | | A | A | C | C | B |

Examples 10 and 14 were excellent in crack resistance when bent and adhesion when bent. In particular, Example 10 was criteria A for both crack resistance when bent and adhesion when bent.

Note that, for Example 10, the MFR at 372°C and 5 kgf was 22 g/10 min, a tensile elongation was 21.2%, a tensile modulus was 892.9 MPa, a tensile strength was 19.98 MPa, a dielectric constant (10 GHz) was 2.16, a dielectric loss tangent (10 GHz) was 0.001, a dielectric constant (1 MHz) was 2.02, and a bending stress was 3 MPa.

The tensile elongation, tensile modulus, and tensile strength were measured at 23°C, 50% RH in accordance with JIS K7127:1999 at a tension speed of 50 mm/min.

The dielectric constant and dielectric loss tangent were measured by the cavity resonator perturbation method.

Example 11 had excellent adhesion when bent, and was inferior to Examples 1 to 5, 10 and 14 in terms of crack resistance when bent but superior to Examples 7 to 9, 12 and 13.

In Example 12, due to natural cooling, the cooling rate was less than 10°C/min, resulting in poor crack resistance and adhesion when bent.

In Example 13, the glass transition temperature difference (ΔTg) exceeded 175°C, resulting in poor crack resistance and adhesion when bent.

## Claims

1. A method of producing a molded product in which a fluorine-type thermoplastic resin F is dispersed in a polyimide-type thermoplastic resin P, the method comprising:
preparing a composition comprising the polyimide-type thermoplastic resin P and the fluorine-type thermoplastic resin F which has a lower glass transition temperature than the polyimide-type thermoplastic resin P, wherein a difference ΔTg between a glass transition temperature Tg-p of the polyimide-type thermoplastic resin P and a glass transition temperature Tg-f of the fluorine-type thermoplastic resin F is from 75 to 175°C;
melting the composition at a temperature equal to or higher than a higher melting point between a melting point of the polyimide-type thermoplastic resin P and a melting point of the fluorine-type thermoplastic resin F, and obtaining a molten product; and
starting cooling of the molten product at a cooling rate of 10°C/min or more and obtaining a molded product.

2. A method of producing a molded product according to claim 1, wherein the glass transition temperature Tg-p is from 150 to 250°C.

3. A method of producing a molded product according to claim 1 or 2, wherein a mass ratio of the polyimide-type thermoplastic resin/the fluorine-type thermoplastic resin F in the composition is from 40/60 to 98/2.

4. The method of producing a molded product according to claim 1 or 2, wherein an average dispersed particle size of the fluorine-type thermoplastic resin F in the molded product is less than 10 µm.

5. The method for producing a molded product according to claim 1 or 2, wherein the difference ΔTg is 75 to 125°C.

6. The method of producing a molded product according to claim 1 or 2, wherein the cooling rate is 50°C/min or more.

7. The method of producing a molded product according to claim 1 or 2, wherein the melting point of the polyimide-type thermoplastic resin P is from 300°C to less than 420°C.

8. The method of producing a molded product according to claim 1 or 2, wherein the melting point of the fluorine-type thermoplastic resin F is from 260 to 320°C.

9. A molded product, comprising a polyimide-type thermoplastic resin P having a melting point from 300°C to less than 420°C, and a fluorine-type thermoplastic resin F having a melting point from 260 to320°C, wherein:
a mass ratio of the polyimide-type thermoplastic resin P/the fluorine-type thermoplastic resin F is from 40/60 to 98/2; and
the fluorine-type thermoplastic resin F is dispersed in the polyimide-type thermoplastic resin P with an average dispersed particle size of less than 10 µm.

10. A rectangular wire, comprising a rectangular conductor having a rectangular cross section perpendicular to an axial direction, and a coating layer of an insulating coating material covering an entire circumferential direction of the rectangular conductor, wherein:
the insulating coating material comprises a polyimide-type thermoplastic resin P having a melting point from 300°C to less than 420°C, and a fluorine-type thermoplastic resin F having a melting point from 260 to 320°C;
a mass ratio of the polyimide-type thermoplastic resin P/the fluorine-type thermoplastic resin F is from 40/60 to 98/2;
the fluorine-type thermoplastic resin F is dispersed in the polyimide-type thermoplastic resin P; and
an average dispersed particle size of the fluorine-type thermoplastic resin F is less than 10 µm.

11. The rectangular wire according to claim 10, wherein an average thickness of the coating layer of the insulating coating material is from 10 to 300 µm.

12. The rectangular wire according to claim 10 or 11, wherein an unbiased standard deviation of a thickness of the coating layer of the insulating coating material in the axial direction of the rectangular wire is less than 0.06 mm.

13. The rectangular wire according to claim 10 or 11, wherein a bending stress of the insulating coating material at 23°C is less than 140 MPa.

14. The rectangular wire according to claim 10 or 11, wherein a cross-sectional area of the rectangular conductor is 2.6 mm² or more.
